# FASCICULE DE BREVET EUROPEEN

(11) **EP 3 462 006 B1**
(45) Date de publication et mention de la délivrance du brevet: **11.11.2020**
(21) Numéro de dépôt: 18195354.8
(22) Date de dépôt: 19.09.2018
(51) Int. Cl.: F02B 23/08, F02B 23/10, F02D 13/02, F02D 41/38, F02P 15/02

(54) **MOTEUR A COMBUSTION INTERNE A DEUX SOUPAPES**
ZWEIVENTIL-BRENNKRAFTMASCHINE
TWO-VALVE INTERNAL COMBUSTION ENGINE

(30) Priorité: 29.09.2017 FR 1759057
(43) Date de publication de la demande: 03.04.2019
(73) Titulaire: IFP Energies nouvelles, 92852 Rueil-Malmaison Cedex (FR)
(72) Inventeur: AMBRAZAS, Didier, 94260 FRESNES (FR); CHARMASSON, Sebastien, 91300 MASSY (FR); GAUTROT, Xavier, 92500 RUEIL-MALMAISON (FR); LECHARD, Christophe, 78160 MARLY LE ROI (FR); TROST, Julien, 75004 PARIS (FR); VIOT, Pierre, 75014 PARIS (FR)
(74) Mandataire: IFP Energies nouvelles

(56) Documents cités:
- WO-A1-01/02707
- DE-A1- 3 019 330
- JP-A- S61 244 821
- JP-A- 2012 041 846
- US-A- 6 035 824
- US-A1- 2010 175 673

## Description

Cette invention concerne le domaine des moteurs à combustion interne à injection directe de combustible et à allumage commandé. Elle concerne en particulier un moteur utilisable dans le domaine routier, ou aéronautique, ou encore dans le domaine des installations stationnaires, par exemple un groupe électrogène.

Ce type de moteur comprend généralement au moins un cylindre, un piston coulissant dans ce cylindre en un mouvement rectiligne alternatif, des moyens d'admission d'un comburant, des moyens d'échappement de gaz brûlés, une chambre de combustion, et des moyens d'injection pour injecter un combustible.

Comme cela est connu, lors de la conception d'un moteur, les objectifs de performances, d'émissions de polluants et de tenue mécanique de la chambre de combustion sont de plus en plus exigeants alors que les moyens pour les réaliser peuvent s'opposer les uns aux autres.

Ainsi, l'augmentation des performances entraîne généralement une augmentation des émissions de polluants et des contraintes mécaniques plus fortes.

Pour pallier ces contraintes et de manière à garantir une faible émission de polluants et une tenue mécanique satisfaisante sur toute une plage de fonctionnement du moteur, il est indispensable que le mélange carburé (comburant/combustible) dans la chambre de combustion soit le plus homogène possible.

On connait les documents US-6267107 et US2005241612 qui décrivent une chambre de combustion à fort squish à injection directe dont l'allumage se fait par au moins une bougie avec une utilisation possible de LIVC (Late Intake Valve Closure pouvant être traduit par fermeture tardive de la soupape d'admission). Les brevets PH2010000186 et US3658046 font également mention d'une chambre de combustion générant du squish au travers d'une forme spécifique proche de l'ellipse couplés à un double dispositif d'allumage. Enfin, les documents US 2010/175673 , JP 2012041846 A et WO 01/02707 A1 décrivent des chambres de combustion à injection directe ou indirecte générant dans le mélange carburé un mouvement de « swirl » et/ou de « tumble ». Cependant, aucun document ne décrit l'architecture du moteur selon

l'invention qui comprend une combinaison optimisée de moyens de combustion, d'allumage, d'alimentation et d'éléments mécaniques de construction.

Ainsi, la présente invention concerne un moteur à combustion interne comprenant au moins deux cylindres dans lesquels se déplace un piston en correspondance avec une chambre de combustion. Selon l'invention ladite chambre de combustion comprend une unique soupape d'admission, une unique soupape d'échappement, un unique injecteur de carburant, deux bougies d'allumage, et des moyens de création d'un écoulement en « swumble » dans ladite chambre.

Selon l'invention, le moteur à combustion interne comporte trois cylindres.

Le collecteur d'échappement peut être intégré dans la culasse.

Les injecteurs et les bougies d'allumage peuvent ne pas traverser les conduits d'eau, ni d'huile.

Selon l'invention, l'unique injecteur de carburant est disposé dans la chambre de combustion, pour une injection directe de carburant.

On peut utiliser le moteur à combustion selon l'invention pour fonctionner en un cycle de Miller ou Atkinson.

L'invention décrit un nouveau concept d'architecture de moteur à combustion interne développé spécifiquement pour les moteurs à allumage commandé à haut rendement.

D'autres caractéristiques et avantages du dispositif selon l'invention, apparaîtront à la lecture de la description ci-après d'exemples non limitatifs de réalisations, en se référant aux figures annexées et décrites ci-après.
La figure 2 illustre une chambre de combustion selon un mode de réalisation de l'invention.
La figure 3 montre une réalisation du motif culasse.
La figure 4 montre une vue d'ensemble avec le chemin d'étanchéité dit en « serpentin » de la culasse.
La figure 5 illustre le collecteur d'échappement intégré.

Avec la sévérisation rapide des normes antipollution en Europe et dans le monde, les fabricants de moteurs, qu'ils soient destinés à l'industrie aéronautique ou routière, doivent toujours les améliorer en apportant de nouvelles idées pour les moteurs à combustion interne. Si les moteurs à allumage par compression ont longtemps eu la faveur des utilisateurs du fait de leur plus grand rendement, ils pâtissent aujourd'hui d'une image détériorée pour des raisons de santé publique. Le moteur à allumage commandé redevient donc un des acteurs majeurs de l'évolution des moteurs à combustion interne. Afin qu'il puisse répondre à la rigueur des évolutions normatives, il doit intégrer toujours plus de technologies et idées nouvelles.

La présente invention propose un moteur à allumage commandé innovant en ce qu'il est conçu à partir d'un ensemble de plusieurs solutions techniques existantes combinées pour la première fois et qui interagissent pour constituer un produit en rupture en termes de performances énergétiques tout en restant compétitif sur les aspects de compacité, coût et durabilité.

Une des spécificités de ce moteur est d'avoir été développé avec pour contrainte de départ de pouvoir fonctionner en cycle de Miller sur une large plage de fonctionnement. Le cycle de Miller se caractérise par une fermeture de la ou des soupapes d'admission avant le point mort bas du piston. Cela permet d'avoir un travail récupéré plus important en plus d'un refroidissement de la charge admise et donc un rendement global du moteur meilleur. Cependant, ce type de cycle a une plage d'utilisation très limitée pour un moteur à allumage commandé conventionnel du fait d'un impact non négligeable sur l'aérodynamique du mélange carburé et plus spécifiquement une diminution significative de la vitesse de combustion due à une forte baisse de l'énergie cinétique turbulente à l'allumage.

Afin de pallier à ce manque de turbulence à l'allumage, il a été choisi de concevoir un moteur dont la chambre de combustion et la structure aérodynamique d'admission comportent des moyens de création d'un écoulement dit « swumble ». Le « swumble » est composé de « swirl » (tourbillon longitudinal), et de « tumble » (tourbillon transversal).

Le « swirl », qui est un mouvement macroscopique de rotation du mélange carburé autour d'un axe colinéaire à l'axe du cylindre, se caractérise par une bonne conservation du mouvement au cours du processus d'admission, et plus spécifiquement au cours de la remontée du piston. C'est un mouvement macroscopique aérodynamique qui est généralement utilisé pour les moteurs à combustion interne à allumage par compression où c'est un bon moyen d'homogénéiser le mélange carburé.

Le « tumble » est lui aussi un mouvement macroscopique de rotation du mélange carburé mais autour d'un axe sensiblement perpendiculaire à l'axe du cylindre. Il a la particularité de se transformer en mouvements aérodynamiques microscopiques qui créent de la turbulence lors de la remontée du piston. C'est un mouvement macroscopique aérodynamique qui est généralement utilisé pour les moteurs à combustion interne à allumage commandé où c'est un bon moyen d'obtenir une vitesse de combustion acceptable. Par ailleurs, ce mouvement est assez sensible à la géométrie de la chambre de combustion ainsi qu'à la loi de levée, aussi bien en termes d'étalement que hauteur de levée maximale.

Ainsi, le « swumble » peut être défini comme un mouvement de rotation de l'air selon l'axe du cylindre combiné avec un mouvement de rotation selon un axe perpendiculaire à l'axe dudit cylindre. L'utilisation du « swumble » permet de bénéficier des avantages des deux structures aérodynamiques détaillées ci-dessus et donc de bénéficier d'une excellente homogénéisation et d'une meilleure vitesse de combustion grâce à un niveau de turbulence plus élevée lors de la phase d'admission que ce qu'on observe avec les meilleurs moteurs à allumage commandé actuels.

Ainsi, la plage d'utilisation du cycle Miller est donc fortement élargie.

Afin de coupler cette spécificité d'admission typée « swumble » à une forte compacité et un coût mesuré, le moteur selon l'invention comporte uniquement deux soupapes par cylindre, dont une soupape d'admission et une soupape d'échappement, avec une seule injection directe et deux points d'allumage. La forme du conduit d'admission et de la chambre de combustion, ainsi que le positionnement relatif des dispositifs d'injection et d'allumage constituent les moyens principaux pour obtenir l'admission en « swumble ». En effet, ces éléments peuvent être configurés pour initier un mouvement de rotation de l'air selon l'axe du cylindre combiné avec un mouvement de rotation selon un axe perpendiculaire à l'axe dudit cylindre.

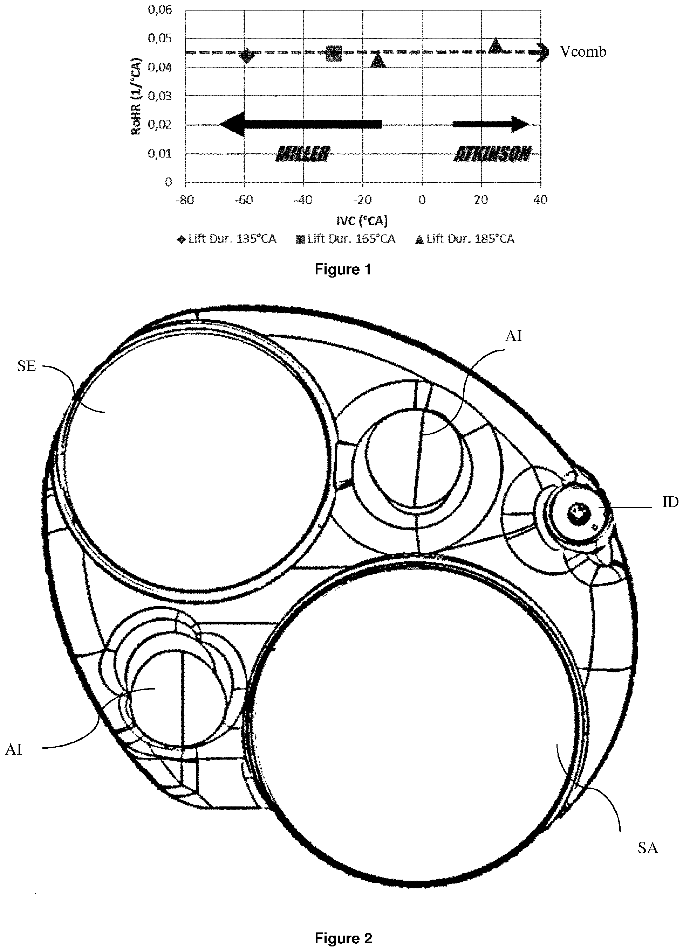

La présente invention a pu être évaluée et comparée aux meilleurs moteurs à allumage commandé actuels. La figure 1 montre la valeur ajoutée de la présente invention en présentant l'impact de la loi de levée sur la durée de combustion.

Le graphique de la figure 1 présente en abscisse l'angle de fermeture de la ou des soupapes d'admission (IVC). Une valeur négative correspond à une fermeture avant le point mort bas (PMB) du piston alors qu'une valeur positive représente une fermeture lors de la remontée du piston. L'axe des ordonnées correspond au taux de dégagement de chaleur qui est représentatif de la vitesse de combustion (RoHR). La dernière variable est l'étalement de la loi de levée (Lift Dur). Un étalement limité (135°CA et 165°CA avec °CA angle vilebrequin) correspond à une loi de levée spécifique du cycle Miller alors qu'un étalement normal (185°CA) correspond à une loi de levée conventionnelle. On constate ici que quelle que soit la loi de levée choisie la vitesse de combustion Vcomb est identique. En particulier, on a des vitesses de combustion identiques entre un cycle Miller et un cycle classique (cycle Atkinson), ce qui montre bien l'intérêt de l'architecture du moteur selon l'invention comportant du « swumble » en cycle Miller.

On constate que la durée de combustion est indépendante de l'étalement et du calage de la loi de distribution, ce qu'on ne retrouve pas sur les meilleurs moteurs à allumage commandé actuels. Cela montre que le rendement global du moteur à combustion interne selon l'invention est amélioré de façon notable.

Les figures 2 à 5 présentent les différentes caractéristiques de la présente invention.

La figure 2 décrit une réalisation non limitative de la chambre de combustion, qui comporte une soupape d'admission de comburant SA, une soupape d'échappement SE, deux points d'allumage Al, et un point d'injection ID.

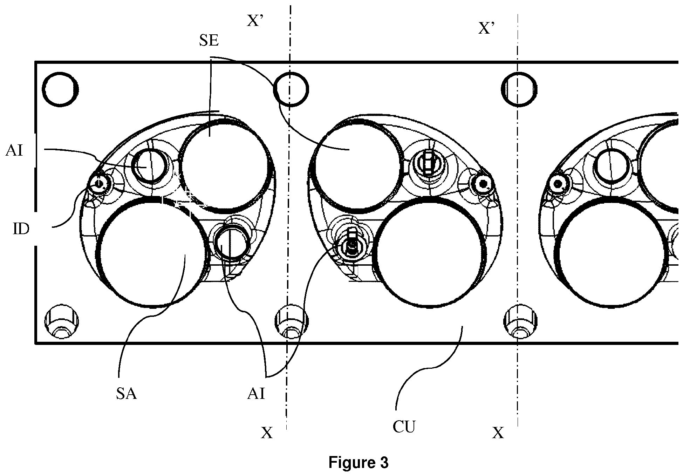

Dans un but de compacité, le motif culasse choisi est bien spécifique afin de permettre l'intégration de tous les éléments annexes tels les deux bougies AI, l'injecteur ID, les deux soupapes SA et SE, et d'obtenir une bonne tenue thermomécanique (figure 3). On appelle motif culasse, la représentation sur la culasse d'un moteur thermique d'une chambre de combustion du moteur thermique équipée des éléments annexes. Contrairement à la majorité des culasses où le motif est réalisé par une simple translation pour chaque cylindre, on utilise ici un motif culasse CU réalisé par symétrie par un plan séparant deux chambres de combustion consécutives (par exemple le plan passant par l'axe des vis de culasse), axes XX' sur la figure 3. En d'autres termes, pour deux cylindres consécutifs, la disposition des éléments annexes est symétrique par le plan XX correspondant ici à l'axe des vis de culasse.

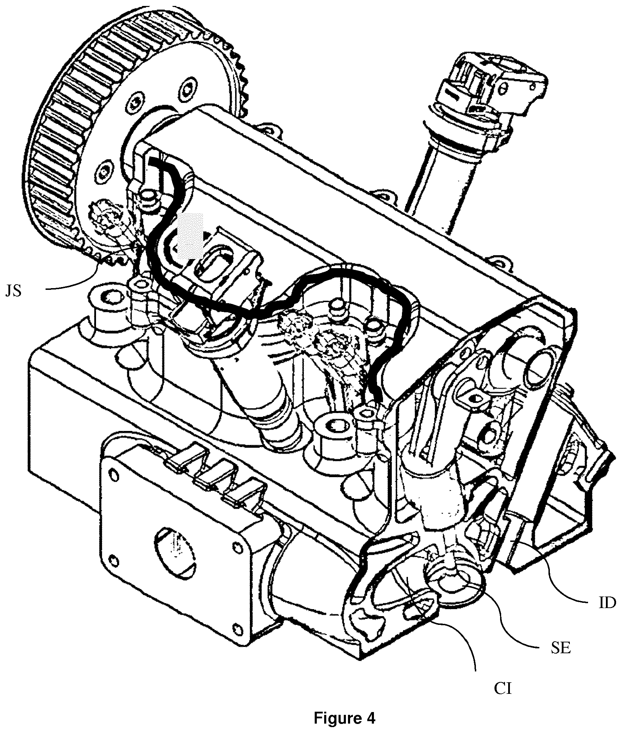

Il en résulte un chemin d'étanchéité entre la culasse et le couvre-culasse en « serpentin » spécifique à la présente invention. En effet, pour éviter la conception de fourreaux, et donc un poids, un coût et un encombrement importants, bougies et injecteurs ne traversent ni le noyau d'eau ni le noyau d'huile. Le chemin d'étanchéité doit donc les contourner. La figure 4 montre le chemin d'étanchéité en « serpentin » visualisé par la ligne JS.

Dans un objectif de compacité et de performances, le moteur à combustion interne est constitué de trois cylindres. Toutefois, le moteur à combustion interne selon d'autres variantes non couvertes par les revendications pourrait être constitué d'un autre nombre de cylindres, tant qu'il comprend au moins deux cylindres.

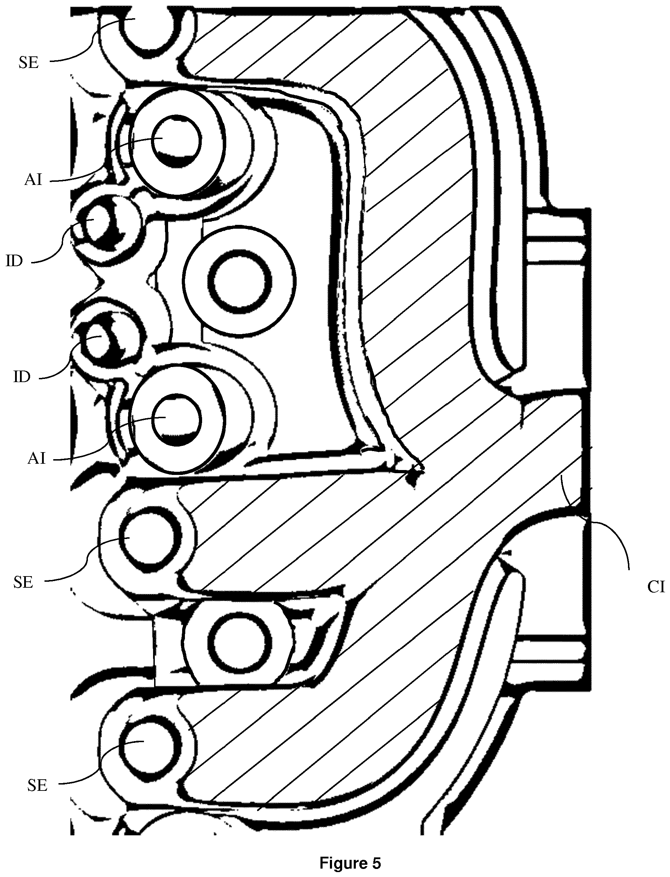

Les figures 4 et 5 montrent le choix technique d'implémenter un collecteur échappement intégré CI à la culasse ce qui permet de répondre aux problématiques de performances, de compacité et de coût. Le collecteur d'échappement est dit intégré à la culasse, car l'ensemble culasse et collecteur d'échappement est réalisé en une seule pièce. La soupape d'échappement SE relie la chambre de combustion (non représentée) au collecteur d'échappement intégré CI. Cette figure illustre le positionnement des moyens d'injection ID. En effet, ce choix technique permet d'obtenir ces avantages grâce à un meilleur contrôle de la thermique autour des conduits échappement. En particulier, dans le cas d'une présence de suralimentation par turbocompresseur les conditions thermiques des gaz d'échappement en entrée turbine sont ainsi mieux contrôlées. De plus, le collecteur intégré CI à la culasse est plus compact qu'une solution conventionnelle où il faut prendre en compte les longueurs en prise nécessaires pour la visserie notamment. Enfin, le coût est réduit par l'absence de collecteur spécifique en inox (pour la tenue thermique) et d'éléments d'attaches de ce dernier.

Dans sa configuration préférentielle, la présente invention présente une solution de distribution par butées avec deux arbres à cames concentriques. Mais une architecture à deux arbres à cames distincts est également tout à fait possible.

Enfin, dans sa réalisation préférée, le moteur a trois cylindres suralimentés par un turbocompresseur mécanique, mais il pourrait très bien fonctionner dans une configuration comportant au moins deux cylindres (variante non couverte par les revendications), et pour toute boucle d'air d'alimentation suralimenté ou non.

## Revendications

1. Moteur à combustion interne constitué de trois cylindres dans lesquels se déplace un piston en correspondance avec une chambre de combustion, selon lequel ladite chambre de combustion comprend une unique soupape d'amission (SA), une unique soupape d'échappement (SE), un unique injecteur de carburant (ID) disposé dans la chambre de combustion, deux bougies d'allumage (Al), et des moyens de création d'un écoulement en « swumble » dans ladite chambre, c'est-à-dire un mouvement de rotation de l'air selon l'axe du cylindre combiné avec un mouvement de rotation selon un axe perpendiculaire à l'axe dudit cylindre, lesdits moyens de création d'un écoulement en « swumble » comprenant la forme du conduit d'admission et de la chambre de combustion et le positionnement relatif de l'injecteur et des bougies d'allumage, et selon lequel pour deux cylindres consécutifs, la disposition de la soupape d'admission, de la soupape d'échappement, de l'injecteur de carburant et des deux bougies d'allumage est symétrique par un plan séparant deux chambres de combustion consécutives.

2. Moteur à combustion interne selon l'une des revendications précédentes, dans lequel le collecteur d'échappement (CI) est intégré dans la culasse.

3. Moteur à combustion interne selon l'une des revendications précédentes, dans lequel les injecteurs et les bougies d'allumage ne traversent pas les conduits d'eau, ni d'huile.

4. Utilisation d'un moteur à combustion selon l'une des revendications précédentes pour fonctionner en un cycle de Miller ou Atkinson.

## Patentansprüche

1. Brennkraftmaschine, die aus drei Zylindern gebildet ist, in denen sich ein Kolben unter Zusammenwirkung mit einer Brennkammer bewegt, wobei die Brennkammer ein einziges Einlassventil (SA), ein einziges Auslassventil (SE), einen einzigen Kraftstoffinjektor (ID), der in der Brennkammer angeordnet ist, zwei Zündkerzen (Al) und Mittel zur Erzeugung einer "Drall-und-Tumble"-Strömung in der Kammer, das heißt einer Drehbewegung von Luft entlang der Achse des Zylinders, kombiniert mit einer Drehbewegung entlang einer senkrecht zur Achse des Zylinders verlaufenden Achse, umfasst, wobei die Mittel zur Erzeugung einer "Drall-und-Tumble"-Strömung die Form des Einlasskanals und der Brennkammer und die relative Positionierung des Injektors und der Zündkerzen umfassen, und wobei für zwei aufeinanderfolgende Zylinder die Anordnung des Einlassventils, des Auslassventils, des Kraftstoffinjektors und der beiden Zündkerzen symmetrisch um eine Ebene ist, die zwei aufeinanderfolgende Brennkammern trennt.

2. Brennkraftmaschine nach einem der vorhergehenden Ansprüche, wobei der Auslasskrümmer (CI) im Zylinderkopf integriert ist.

3. Brennkraftmaschine nach einem der vorhergehenden Ansprüche, wobei die Injektoren und die Zündkerzen die Wasser- und die Ölleitungen nicht durchqueren.

4. Verwendung einer Brennkraftmaschine nach einem der vorhergehenden Ansprüche für den Betrieb in einem Miller- oder Atkinson-Zyklus.

## Claims

1. Internal combustion engine made up of three cylinders in which there moves a piston in collaboration with a combustion chamber, whereby the said combustion chamber comprises a single intake valve (SA), a single exhaust valve (SE), a single fuel injector (ID) arranged in the combustion chamber, two spark plugs (Al), and means for creating a flow inside of the said chamber, "swumble", namely a movement whereby the air rotates about the axis of the cylinder combined with a movement of rotation about an axis perpendicular to the axis of the said cylinder, the said "swumble" flow creating means comprising the shape of the intake duct and of the combustion chamber and the relative positioning of the injector and of the spark plugs, and whereby, for two consecutive cylinders, the layout of the intake valve, of the exhaust valve, of the fuel injector and of the two spark plugs is symmetrical about a plane separating two consecutive combustion chambers.

2. Internal combustion engine according to one of the preceding claims, in which the exhaust manifold (CI) is integrated into the cylinder head.

3. Internal combustion engine according to one of the preceding claims, in which the injectors and the spark plugs do not cross either the water or the oil galleries.

4. Use of a combustion engine according to one of the preceding claims to run on a Miller or Atkinson cycle.
